Europäisches Patentamt

European Patent Office

Office européen des brevets

(19)

(11) Veröffentlichungsnummer : **0 348 340 B1**

(12)                    ## EUROPÄISCHE PATENTSCHRIFT

(45) Veröffentlichungstag der Patentschrift :
**15.04.92 Patentblatt 92/16**

(51) Int. Cl.$^5$ : **G01B 11/24, H04N 7/18**

(21) Anmeldenummer : **89730121.4**

(22) Anmeldetag : **12.05.89**

(54) **Verfahren und Vorrichtung zur Erfassung des Achsverlaufes eines langgestreckten, zylindrischen Körpers.**

(30) Priorität : **19.05.88 DE 3817387**

(43) Veröffentlichungstag der Anmeldung :
**27.12.89 Patentblatt 89/52**

(45) Bekanntmachung des Hinweises auf die
Patenterteilung :
**15.04.92 Patentblatt 92/16**

(84) Benannte Vertragsstaaten :
**AT ES FR GB IT**

(56) Entgegenhaltungen :
**WO-A-86/05583**
**DE-A- 3 521 260**
**US-A- 3 604 940**

(73) Patentinhaber : **MANNESMANN**
**Aktiengesellschaft**
**Mannesmannufer 2**
**W-4000 Düsseldorf 1 (DE)**

(72) Erfinder : **Ettwig, Hans Heinrich, Dr.-Ing.**
**Von-Büllingen-Strasse 75**
**W-4134 Rheinberg 4 (DE)**
Erfinder : **Biller, Horst, Dr.-Ing.**
**Am Biestenkamp 26**
**W-4330 Mülheim (DE)**
Erfinder : **Deppe, Gerd-Joachim, Dr.rer.nat.**
**Eibendonk 24**
**W-4150 Krefeld-Oppum (DE)**
Erfinder : **Schneider, Heinz, Dr.-Ing.**
**Kleiansring 10**
**W-4000 Düsseldorf 31 (DE)**
Erfinder : **Bellmann, Manfred, Dr.-Ing.**
**Am Kessel 6**
**W-4030 Ratingen (DE)**

(74) Vertreter : **Meissner, Peter E., Dipl.-Ing. et al**
**Patentanwaltsbüro Meissner & Meissner,**
**Herbertstrasse 22**
**W-1000 Berlin 33 (DE)**

## Beschreibung

Die vorliegende Erfindung betrifft ein Verfahren zur Erfassung des Achsverlaufes eines langgestreckten, zylindrischen Körpers gemäß dem Oberbegriff des Hauptanspruches, sowie eine Einrichtung zur Durchführung des Verfahrens.

Aus der DE-A-29 08 534 ist ein Verfahren bekannt, bei dem zur Feststellung oder Messung einer Querschnittsabmessung oder Abweichung von einer vorbestimmten Gestalt oder Querschnittsabmessung länglicher Gegenstände ein gebündelter Lichtstrahl von einer Lichtquelle auf den sich bewegenden Gegenstand gerichtet wird, um durch einen Bildsensor die von zwei Grenzabschnitten des Gegenstandes erzeugten Bilder in elektrische Signale umzuwandeln, aus denen die Querschnittsabmessung oder die Abweichung von einer vorbestimmten Abmessung abgeleitet werden kann. Bei diesem Verfahren wird die Lichtquelle zusammen mit dem Bildsensor um den sich axial bewegenden Gegenstand herumgedreht, so daß der Gegenstand schraubenlinienförmig abgetastet wird. Dieses Verfahren und auch die dazu vorgeschlagene Meßeinrichtung ist nicht geeignet, um die Abweichung von der Geradheit eines langgestreckten Körpers zu messen, weil der Gegenstand statisch unbestimmt gelagert ist und während der Längsbewegung die Lage der Körperachse sich ständig ändert.

Aufgabe der vorliegenden Erfindung ist es, ein berührungslos arbeitendes Verfahren und eine Vorrichtung zu schaffen, das bzw. die geeignet ist, auch unter rauhen Umweltbedingungen den Achsverlauf eines langgestreckten zylindrischen Körpers über dessen gesamte Länge mit hoher Genauigkeit und geringem zeitlichen Aufwand zu bestimmen.

Diese Aufgabe wird durch das Verfahren des Anspruchs 1 bzw. die Eirinchtung des Anspruch 5 gelöst. Vorteilhafte Weiterbildungen sind in den abhängigen Ansprüchen dargelegt.

Die ständig steigenden Anforderungen der weiterverarbeitenden Industrie an die Geradheit von langgestreckten Körpern, insbesondere von Rohren, haben die herstellenden Werke veranlaßt, sich zum einen Gedanken zu machen über zuverlässig und kostengünstig arbeitende Meßmethoden und zum anderen über einzuhaltende Toleranzen für die Geradheit, um den Aufwand für ein zusätzliches Richten in Grenzen zu halten. Dies stößt schon von der Definition der Geradheit her auf Schwierigkeiten, da die angewandte Meßmethode und Definition der Geradheit oft nicht voneinander zu trennen sind. Dies trifft für alle Meßverfahren zu, bei denen die Abweichung der Geradheit bezogen ist auf eine vorbestimmte Meßlänge (z.B. 1 m) des zu messenden Körpers. Beispiele hierfür sind, daß der Körper auf eine ebene Meßplatte aufgelegt wird und der größte sich ergebende Abstand der die Meßplatte nicht berührenden Durchbiegung des Körpers bestimmt wird. Bei einem anderen Verfahren wird der zu messende Körper auf zwei Taumelscheibenpaare gelegt, die einen definierten Abstand zueinander haben. In der Mitte zwischen den beiden Taumelscheibenpaaren wird eine Meßuhr auf den Stab gesenkt und der Stab in Rotation um seine Längsachse gebracht. Mit der Meßuhr wird dann der Schlag des Stabes gemessen. Der Schlag ist die größte Abweichung des Stabes von der Nullinie in vertikaler Richtung sowohl nach oben als auch nach unten gemessen. Der halbe Schlag entspricht der Geradheitsabweichung des Stabes. Mit unter diese Kategorie fällt auch die Bestimmung der Abweichung von der Geradheit mit Hilfe von induktiven Weggebern, indem der Körper auf als Luftlager ausgebildete Auflager gelegt und um seine Längsachse gedreht wird. Allen diesen Meßverfahren ist gemeinsam, daß die durch die Schwerkraft verursachte Durchbiegung des Körpers in das Meßergebnis mit einfließt und somit bei geringer Eigensteifigkeit des zu messenden Körpers die Meßergebnisse stark verfälscht werden.

Der Kerngedanke des vorgeschlagenen berührungslos arbeitenden Meßverfahrens besteht nun darin, daß unter der Voraussetzung, daß die Verformung durch das Eigengewicht des zu messenden Körpers und die Achsabweichung im Rahmen der Meßgenauigkeit linear unabhängig voneinander sind, der Einfluß der Verformung durch das Eigengewicht durch eine statisch bestimmte Lagerung und eine Rotation des Körpers um seine Längsachse eliminiert wird. Während der Rotation ist der Körper dabei axial fixiert.

Für den einfachsten Fall, daß der zu messende Körper eine ideale Querschnittsform über die gesamte Länge aufweist, wird die Veränderung der Winkellage nur einer sichtbaren äußeren Begrenzung des Körpers in bezug auf die optische Achse eines auf den Körper gerichteten Bildsensors in wenigstens einer im Abstand zu den beiden Auflagestellen ausgewählten Meßebene in elektrische Signale umgewandelt. Aus diesen Signalen kann mit Hilfe eines mathematischen Modells die Achsabweichung in der Meßebene berechnet und mit den zu Null gesetzten Achsabweichungen in den beiden Auflagestellen zu einer Funktion des Verlaufes der Achsabweichung über die Länge des Körpers verknüpft werden. Dieses sehr vereinfachte Verfahren wird nur in Sonderfällen anwendbar sein, da die Voraussetzung einer idealen Querschnittsform meistens nicht gegeben ist und die Erfassung der Achsabweichung in nur einer Meßebene nur dann ausreichend genau ist, wenn der Verlauf der Achsabweichung einer mathematisch einfachen Funktion z. B. einer Parabel gehorcht. Sobald die Verlaufsfunktion komplizierter wird und der Körper keine ideale Querschnittsform aufweist, würde die Aussagegenauigkeit bei der Erfassung der Achsabweichung in nur einer Meßebene stark abnehmen. Aus diesem

2

Grunde wird in Weiterbildung des Erfindungsgedankens vorgeschlagen, die Veränderung der Winkellage von zwei, nahezu einander gegenüberliegenden sichtbaren äußeren Begrenzungen des Körpers gleichzeitig zu erfassen und die Achsabweichung an mehreren über die Länge des Körpers verteilt angeordneten Meßebenen zu bestimmen. Mit der Abtastung einer zweiten sichtbaren äußeren Begrenzung können die durch die Abweichung der Querschnittsform herrührenden Bewegungen der Längsachse erfaßt und mathematisch getrennt und eliminiert werden. Die Bestimmung der Achsabweichung an mehreren über die Länge des Körpers verteilt angeordneten Stellen erhöht die Aussagegenauigkeit der zu ermittelnden Ausgleichsfunktion. Alternativ ist es auch möglich, nur einen feststehenden Bildsensor zu verwenden und den auf Rollen gelagerten Körper durch eine entsprechende Verschiebeeinrichtung in Längsrichtung zu bewegen. Die Verschiebeeinrichtung könnte z. B. ein Schlitten oder ein Fahrgestell sein, auf dem die Rollenpaare fest oder im Abstand veränderbar angeordnet sind. Die Messung erfolgt dann nach jedem Verschiebetakt, so daß zeitlich versetzt aber in der Summe ebenfalls eine Vielzahl von verschiedenen über die Länge des Körpers verteilt ausgesuchten Stellen erfaßt werden würde. Auch die Umkehrung der Längsverschiebung ist vorstellbar, d. h. der auf den Rollenpaaren gelagerte Körper ist axial fixiert und der Bildsensor wird parallel dazu bewegt und erfaßt taktweise über die Länge des Körpers verschiedene Meßstellen.

Für einen zu messenden Körper mit kreisförmigem Querschnitt (z. B. Rohr oder Stab) ergeben sich für das Meßverfahren aus den geometrischen Gegebenheiten folgende Zusammenhänge.

Mit der Beobachtung zweier sichtbarer äußerer Begrenzungen während der Drehung des Körpers, werden Signale in dem Bildsensor bzw. in den Bildsensoren erzeugt, aus denen vier Meßgrößen abgeleitet werden können.

a) Der Durchmesser

b) Die Abweichung der tatsächlichen Achsposition von der idealen Achslage, die durch die zwei Auflagerpunkte vorgegeben ist.

c) Die Variation des Durchmessers beim Drehen eines ovalen Rohres

d) Die Bewegung der Rohrachse beim Abrollen eines ovalen Rohres in bezug auf die Auflagepunkte.

Von diesen vier Meßgrößen sind die Punkte b) bis d) vom Drehwinkel abhängig und nur die Meßgröße a) ist drehunabhängig. In erster Näherung wird angenommen, daß die von der Drehung abhängigen Meßgrößen einen sinusförmigen Verlauf aufweisen. Für die Bestimmung der Ovalität und des Durchmessers eines ovalen Rohres in Abhängigkeit vom Drehwinkel werden die Signale der beiden beobachteten Begrenzungen addiert. Daraus ergibt sich nach der Bewertung und Verarbeitung der Signale der mittlere Durchmesser und die Ovalität als Amplitude des Sinusterms. Für die Bestimmung der Achsabweichung werden die Signale der beiden beobachteten Begrenzungen subtrahiert. Dabei ergibt sich, daß der Verlauf der Differenz der Begrenzungen sich aus zwei überlagernden Sinustermen zusammensetzt. Zieht man mathematisch davon die phasenverschobene Ovalität in Abhängigkeit vom Drehwinkel ab, so bleibt die Achsabweichung als Amplitude des Sinusterms.

Der Vorteil des vorgeschlagenen Verfahrens liegt darin, daß die Messung berührungslos erfolgt und die zeitliche Taktfolge klein ist, da genau genommen nur eine halbe Drehung des Körpers erforderlich ist. Aus Gründen der Redundanz der Meßwerte wird aber vorzugsweise während einer vollen Umdrehung gemessen. Durch die statisch bestimmte Auflage und die Drehung des Körpers während der Messung rechnet sich der statische Anteil der Durchbiegung infolge der Schwerkraft heraus.

Mit dem relativ einfachen mathematischen Modell erhält man den Verlauf der Achsabweichung des Körpers über dessen Länge in einer Ebene. Bei einem entsprechenden Aufwand hinsichtlich der Verarbeitung der Signale ist es auch möglich, den Verlauf der Achsabweichung in Abhängigkeit vom Drehwinkel zu erfassen. Dies ist dann von Bedeutung, wenn man es mit einem verdrallten Körper zu tun hat, bei dem die Achsabweichung sich nicht nur in Längsrichtung in einer Ebene, sondern zusätzlich in Umfangsrichtung ändert.

Bei dem vorgeschlagenen Meßverfahren fallen andere wichtige geometrische Kenndaten, z. B. wie der mittlere Durchmesser und die Ovalität mit an. Für die Weiterverarbeitung ist dies von Bedeutung, da mit diesen Angaben entschieden werden kann, ob eine Kalibrierung der Enden bzw. ein zusätzlicher Arbeitsgang (z. B. aufweiten) erforderlich ist.

Durch eine relative Verschiebung des Körpers in Längsrichtung in bezug auf die gerichteten Bildsensoren ist es möglich, die Achsabweichung in einer im definierten Abstand zum Ende des Körpers liegenden Meßebene zu ermitteln. Dies kann durch eine Verschiebung des Körpers selbst mittels Treibrollen oder durch eine Verschiebung des die Rollenpaare tragenden Fahrgestelles bei stehendem Körper realisiert werden. Im Vorstehenden wurde schon darauf hingewiesen, daß die Bewegung des Körpers in den Auflagestellen von entscheidender Bedeutung für die Ermittlung der Achsabweichung ist. Aus diesem Grunde ist es erforderlich, daß der Körper so gedreht und gelagert wird, daß die Amplitude von dynamisch bedingten Ausschlägen klein ist.

Die zu erreichende Meßgenauigkeit wird unter anderem auch durch die Größe des Beobachtungswinkels beeinflußt. Ist er sehr klein, dann nähert sich der Schnittpunkt des die sichtbare äußere Begrenzung tangierenden Abtaststrahles mit der Scharfebene mehr und mehr dem Schnittpunkt der in der Scharfebene liegenden und durch den Mittelpunkt gehenden Querschnittserstreckung des Körpers mit dieser. Im Falle eines Beobachtungswinkels von 0 Grad würden die beiden Schnittpunkte zusammenfallen.

Für die Durchführung des Verfahrens wird auch eine Einrichtung vorgeschlagen, bei der der zu messende Körper auf zwei im veränderlichen Abstand voneinander angeordneten Rollenpaaren gelagert ist und mindestens einen auf den Körper gerichteten Bildsensor aufweist, der mit einer Auswerteeinheit verbunden ist. Im Falle eines Körpers mit einer kreisförmigen Querschnittsform erfolgt die Lagerung direkt auf den Rollen, im Falle einer von der Kreisform abweichenden Querschnittsform mittels einer Rollenhalterung. Der Bildsensor ist an einer parallel zur Längsachse des Körpers verschiebbaren Haltevorrichtung befestigt, wobei während der Drehung des Körpers die anvisierte äußere Begrenzung des Körpers in der einmal gewählten Meßebene verbleibt. Um die Aussagekraft der ermittelten Ausgleichsfunktion der Achsabweichung zu erhöhen, werden mehrere mit der Auswerteeinheit verbundene Bildsensoren in einem bestimmten Abstand voneinander auf je einer Haltevorrichtung befestigt. Die genaue Zuordnung der Meßebenen zur Längenposition des zu messenden Körpers wird dadurch erreicht, daß die Meßebene des in Längsrichtung gesehenen ersten bzw. letzten Bildsensors in einem definierten Abstand zu einem der beiden Enden des Körpers sich befindet und die übrigen Bildsensoren sich gleichmässig über die Länge des Körpers verteilen. Dabei beträgt der Abstand dieser Meßebene vom Ende des Körpers gerechnet beispielsweise 100 bis 200 mm. Zur Verschiebung des Körpers in Längsrichtung sind zusätzlich Treibrollen im Bereich der Auflagestellen angeordnet. Alternativ kann auch bei feststehendem Körper die Haltevorrichtung mit dem daran befestigten Bildsensor parallel zur Längsrichtung des Körpers verschoben werden. Eine weitere, schon erwähnte Möglichkeit besteht darin, die Rollenpaare auf einer bewegbaren Verschiebeeinrichtung wie z. B. ein Schlitten oder ein Fahrgestell anzuordnen und diese in bezug auf den feststehenden Bildsensor zu bewegen. Nachteilig bei der alternativen Verschiebung ist, daß an die Führungen hinsichtlich Parallelität und Höhenlage hohe Anforderungen gestellt und diese vor den rauhen Umweltbedingungen z. B. eines Walzwerkes geschützt werden müssen. Weichen die Führungen von der Ideallinie ab, dann bedeutet dies, daß immer wieder neu einjustiert werden muß, um vergleichbare Werte zu erhalten. Zu der längeren Meßzeit infolge der zeitlichen Taktung der Messung ist dann der zeitliche Aufwand für die Nachjustierung hinzuzurechnen. Demgegenüber ist die zusätzliche Installation weiterer Bildsensoren vergleichsweise preiswert, da die kostenintensive Auswerteeinheit nur einmal vorhanden ist. Der weitere Vorteil dieser Meßanordnung liegt darin, daß die Einjustierung aller Bildsensoren nur einmal vorgenommen wird und dann erst nach einer sehr langen Zeit erneut überprüft werden muß.

Durch die vorgenannten Verschiebemöglichkeiten kann der Verlauf der Achsabweichung, beginnend mit dem Kopfende und zusätzlich beginnend mit dem Schwanzende des zu messenden Körpers bestimmt werden. Dann erhält man zwei Verläufe der Achsabweichung, die man mathematisch miteinander verknüpfen kann, so daß bedingt durch den Versatz der Meßebenen weitere Werte zur Stützung der Verlaufsfunktion der Achsabweichung anfallen. Dieses Verfahren ist dann von besonderer Bedeutung, wenn die Länge des zu messenden Körpers größer ist als die zur Verfügung stehende Meßstrecke, die man aus Kosten- und Platzgründen nur für eine mittlere Länge des zu messenden Körpers auslegen wird.

Damit die Amplitude von dynamisch bedingten Ausschlägen des Körpers während der Drehung des Körpers klein ist, werden der Abstand der Rollenpaare und der Durchmesser der Rollen sowie die Drehgeschwindigkeit auf die Abmessungen zu messenden Körpers abgestimmt. Für die praktische Anwendung wird die Drehgeschwindigkeit so gewählt, daß die Umfangsgeschwindigkeit im Bereich zwischen 200 bis 400 mm pro Sekunde liegt.

Die Bildsensoren sind als Zeilen-Kameras ausgebildet, die über Kabel mit der Auswerteeinheit verbunden sind. Die Kameras sind gemultiplext, so daß bezogen auf die Anzahl der Kameras nur jede N-te-Messung genutzt wird, wobei N = Anzahl der Kameras ist. Bei einer Scan-Zeit von 5 Millisekunden erhält man pro Kamera alle N-mal 5 Millisekunden einen Meßwert. Bezogen auf die Drehgeschwindigkeit des Körpers ergibt dies eine Anzahl von Meßwerten pro Umdrehung, die im Bereich zwischen 10 und 50 liegt.

Die Brennweite der Optik der Kamera und der Abstand der Kameras zur Längsachse des Körpers sind so aufeinander abgestimmt, daß die Scharfebene der Kamera in der Ebene der größten Querschnittserstreckung liegt und die von der Optik aufgespannte sektorale Meßebene einen kleinen Beobachtungswinkel aufweist, der im Bereich zwischen 0 und 15 Grad für den halben Beobachtungswinkel liegt. Der Beobachtungswinkel soll so klein wie möglich sein, damit die erforderliche Korrektur, da die Abtastverbindungslinie der beiden äußeren Begrenzungen nicht mit der größten Querschnittserstreckung zusammenfällt, klein ist. Damit mit einer Einstellung ein großer Abmessungsbereich abgedeckt werden kann, wird vorgeschlagen, für jeweils eine Meßebene zwei Kameras an der Haltevorrichtung zu befestigen. Die optischen Achsen der beiden Kameras liegen parallel und haben einen vorbestimmten Abstand voneinander, wobei der Abstand zur Längsachse des Körpers gleich ist.

Damit der Kontrast der anvisierten äußeren Kante gegenüber dem Hintergrund für eine selektive Unterscheidung für die Kamera ausreichend ist, wird für jede Meßebene eine ein schmalbandiges Licht aussendende Leuchte auf der der Kamera abgewandten Seite des Körpers angeordnet. Die Längserstreckung der Leuchte liegt in der Meßebene und ist immer größer als die größte vorgesehene zu messende Querschnittserstreckung des Körpers.

Die vorgeschlagene Meßeinrichtung kann auch dazu genutzt werden, die Länge des Körpers und dessen Querschnitt über die Länge in einer Ebene zu erfassen. Dazu wird beim Einlauf des Körpers in die Meßeinrichtung die erste erfassende Kamera dahingehend umfunktioniert, daß sie die Anfangskante des einlaufenden Körpers erfaßt, wobei mit Hilfe einer zusätzlichen Meßvorrichtung die genaue Position der Längskoordinate bestimmt wird. Eine solche zusätzliche Meßvorrichtung kann z. B. aus zwei Meßrädern bestehen oder eine Diodenzeilenkamera sein. Damit kann der Einfluß einer sich verändernden Einlaufgeschwindigkeit eliminiert werden. Gleichzeitig kann die erste Kamera auch die Querschnittserstreckung in einer Ebene über die Länge des Körpers ermitteln. Zur Kompensation der von unterschiedlichen Temperaturen herrührenden Veränderungen der Meßwerte ist ein direkt an den Körper angebrachtes Temperaturmeßgerät oder ein berührungslos arbeitendes Temperaturmeßgerät vorgesehen.

Die genaue Bestimmung des Verlaufes der Achsabweichung über die Länge des Körpers und die Möglichkeit über einen definierten Abstand zu einem Ende des Körpers, die Meßwerte der Längenposition des Körpers zuzuordnen, kann für die Weiterverarbeitung des Körpers vorteilhaft genutzt werden.

Im Falle der Adjustage von warmgewalzten Rohren kann durch dieses Meßverfahren entschieden werden, ob ein nachgeschalteter Kaltrichtvorgang erforderlich ist, oder ob die gemessene Achsabweichung innerhalb der vorgegebenen Toleranz liegt. Damit würde ein unnötiges das Erzeugnis verteuerndes Kaltrichten vermieden, was in vielen Fällen aus Gründen der Unsicherheit über die tatsächliche Größe der Achsabweichung obligatorisch durchgeführt wird.

Zum anderen kann man durch den gezielten Einsatz eines Kaltrichtens eine möglicherweise vom Kunden aufgestellte scharfe Abnahmeverpflichtung risikolos erfüllen, da durch das Meßverfahren die einzuhaltende Maximalabweichung von der Geradheit schnell und zuverlässig ermittelbar ist. Weiterhin kann die genaue Kenntnis des Verlaufes der Achsabweichung für die Endenbearbeitung genutzt werden. In einem solchen Falle wird die Achsabweichung einer bestimmten Rohrlängenposition und zwar die, die dem vorgegebenen Einspannungspunkt der Bearbeitungsmaschine entspricht, zu Null gesetzt, wobei diese Rohrlängenposition nur in Ausnahmefällen und dann auch nur zufälligerweise identisch wäre mit der Auflagestelle während des Meßvorganges. Durch Transformation der Ausgleichsfunktion erhält man dann Angaben über die Größe des Schlages an dem zu bearbeitenden Ende. Zusätzlich ist mit diesem Meßverfahren auch eine Erkennbarkeit eines sogenannten abgeknickten Endes des Rohres möglich. Dazu wird mit Hilfe der ermittelten Werte für die Achsabweichung der Verlauf im mittleren Rohrlängenbereich durch einen irgendwie gekrümmten Kurvenzug angenähert. Im Bereich der Rohrenden, d. h. etwa bis zu einem Meter vom Rohrende entfernt wird der Verlauf der Achsabweichung durch eine Gerade approximiert. Weist der Übergang der Geraden zu dem gekrümmten Kurvenzug einen offensichtlichen Knick auf, dann liegt der Fall eines abgeknickten Endes vor.

Anhand der Zeichnung werden das erfindungsgemäße Verfahren und die dazugehörige Einrichtung näher erläutert.

Es zeigen:

Figur 1 eine Draufsicht der schematisch dargestellten Meßeinrichtung

Figur 2 einen Schnitt entlang der Linie A-A in Figur 1

Figur 3 ein Blockschaltbild der Meßeinrichtung

Figur 4 die Einzelheiten der Abtastung eines langgestreckten Körpers mit einem ideal kreisrunden Querschnitt

Figur 5 die Einzelheiten der Abtastung eines langgestreckten Körpers mit einem ovalen Querschnitt.

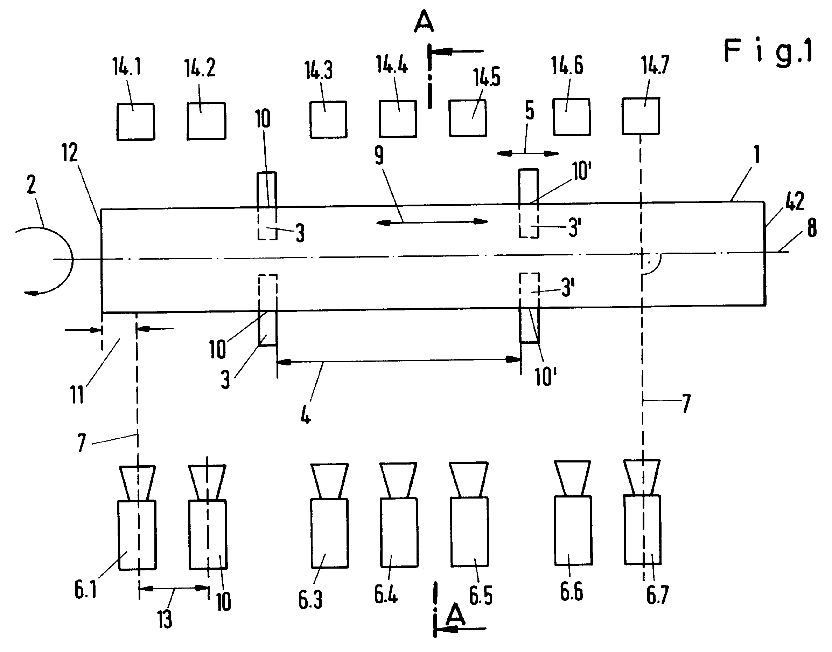

Figur 1 zeigt in einer Draufsicht schematisch die gesamte erfindungsgemäße Meßeinrichtung. Der langgestreckte Körper 1, z. B. ein Rohr, ist drehbar - hier angedeutet durch den Drehpfeil 2 - statisch bestimmt auf einem Drehrollenlagerpaar 3, 3' gelagert. Der Abstand 4 zwischen den beiden Drehrollenlagerpaaren 3, 3' ist durch Längsverschiebung eines Drehrollenlagerpaares 3' veränderbar - hier angedeutet durch den Pfeil 5. Die nur in Umrissen dargestellten Zeilenkameras 6.1 bis 6.7 sind auf den Körper 1 gerichtet, wobei die hier angedeutete Meßebene 7 mit der Achse 8 des Körpers 1 einen rechten Winkel bildet. Der Körper 1 kann in Längsrichtung - hier angedeutet durch den Pfeil 9 in bezug auf die feststehenden Zeilenkameras 6.1 bis 6.7 verschoben werden. Während der Messung wird der Körper axial fixiert und nur um seine Längsachse 8 gedreht, so daß die Meßebene 7 in der einmal gewählten Querschnittsebene des Körpers 1 verbleibt. Nicht dargestellt wurde die Möglichkeit, die Drehrollenlagerpaare 3, 3' auf einen Untersatz in Form eines Bettes oder eines Wagens zu setzen und diesen in bezug auf die Zeilenkameras 6.1 bis 6.7 in Längsrichtung zu verschieben. Dies hätte den Vorteil, daß die Auflagepunkte 10, 10' in Bezug auf die Position des Körpers 1 auch bei einer Längsverschiebung 9 sich nicht verändern würden.

In dem hier gezeigten Ausführungsbeispiel wird der Körper 1 nahezu gleichzeitig durch sieben über die Länge des Körpers 1 verteilt angeordnete Zeilenkameras 6.1 bis 6.7 abgetastet. Um nun die anfallenden Meßwerte der einzelnen Kameras 6.1 bis 6.7 der jeweiligen Position des Körpers zuordnen zu können, hat die links in der Figur dargestellte erste Kamera 6.1 einen bestimmten definierten Abstand 11 zum Ende 12 des Körpers 1. Dieser Abstand 11 kann z. B. 100 bis 200 mm betragen. Da der Längsabstand 13 zwischen zwei benachbarten Kameras 6.1, 6.2 bekannt ist, kann man beginnend mit der Position der ersten Kamera 6.1 alle nachfolgenden Meßebenen 7 der einzelnen Kameras 6.2 bis 6.7 und deren Zuordnung zum Körper 1 bestimmen. Das gleiche gilt auch bei einer Verschiebung des Körpers 1 nach links, so daß die rechts in der Figur dargestellte erste Kamera 6.7 einen definierten Abstand zum anderen Ende 42 des Körpers 1 hätte.

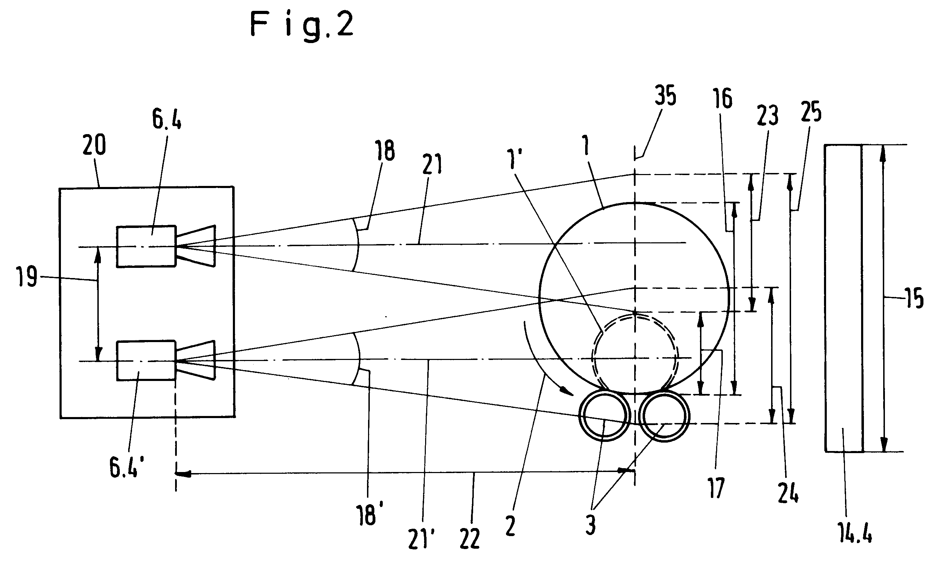

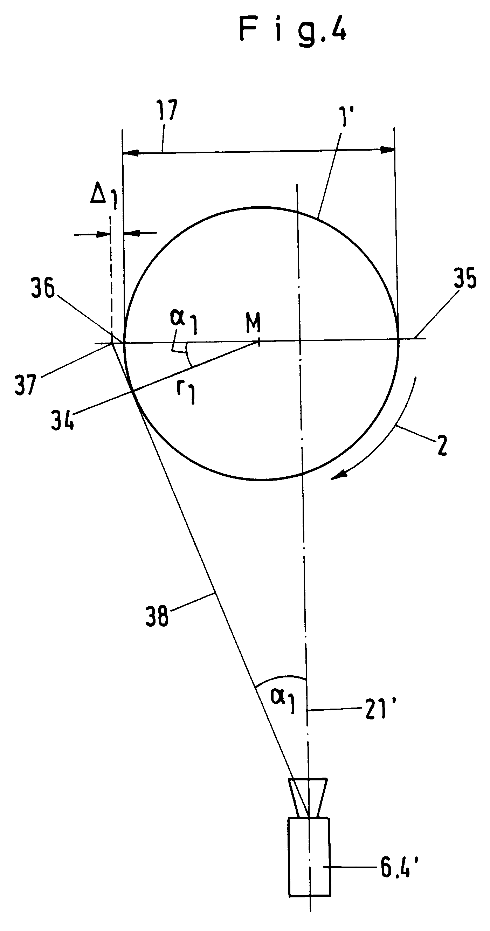

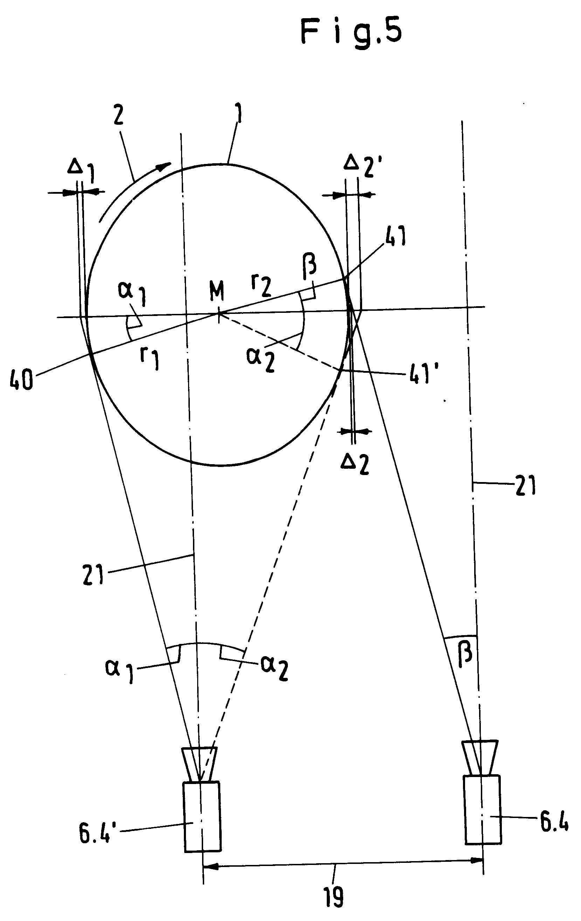

Eine der Voraussetzungen für das Meßprinzip ist, daß die Zeilenkameras 6.1 bis 6.7 die anvisierte äußere Begrenzung 34, 40, 41 des Körpers 1' bzw. des Körpers 1 (siehe Figuren 4 und 5) gegenüber der Umgebung unterscheiden kann. Dazu kann es erforderlich sein, daß bei unzureichendem Kontrast zwischen Körper 1 und der Umgebung eine Hinterleuchtung einzusetzen ist. In diesem Ausführungsbeispiel ist deshalb in jeder Meßbene 7 der jeweiligen Zeilenkamera 6.1 bis 6.7 eine gegenüberstehende Leuchte 14.1 bis 14.7 angeordnet. Das von dieser Leuchte 14.1 bis 14.7 abgestrahlte Lichtband liegt in der gleichen Ebene wie die Meßebene 7 und weist eine Erstreckung 15 auf, die größer ist als der größte Querschnitt 16 des zu messenden Körpers 1 (Figur 2).

In Figur 2 ist die erfindungsgemäße Meßeinrichtung im Schnitt entlang der Linie A-A in Figur 1 dargestellt. Der mit einer durchgehenden Umrißlinie dargestellte Körper 1 symbolisiert hier die größte zu bestimmende Querschnittsabmessung 16, während der mit einer gestrichelten Linie dargestellte Körper 1' die kleinste zu bestimmende Querschnittsabmessung 17 ist. Wie in Figur 1 schon gezeigt, ist der Körper 1, 1' auf einem Drehrollenlagerpaar 3, 3'statisch bestimmt und drehbar gelagert. Um einen möglichst großen Abmessungsbereich der Körper 1, 1' mit einem vergleichsweise kleinen Beobachtungswinkel 18, 18' abdecken zu können, sind in einem bestimmten fest vorgegebenen Abstand 19 zwei Zeilenkameras 6.4, 6.4' je Meßebene 7 in einem Gehäuse, das gleichzeitig als Haltevorrichtung fungiert, angeordnet. Dabei liegen die optischen Achsen 21, 21' der beiden Kameras 6.4, 6.4' parallel und bilden einen rechten Winkel zu der die Längsachse 8 des Körpers 1 enthaltenden Ebene (Figur 1).

Der Abstand 22 zwischen den Kameras 6.4, 6.4' und dem zu messenden Körper 1, 1' ist so gewählt, daß die Scharfebene 35 in der Ebene der größten Querschnittserstreckung 16, 17 des Körpers 1, 1' liegt. Die Meßbereiche 23, 24 der beiden Kameras 6.4, 6.4' überlappen sich in der Scharfebene und schließen einen Gesamtabstand 25 ein, der immer größer ist als die größte Querschnittserstreckung 16 des zu messenden Körpers 1.

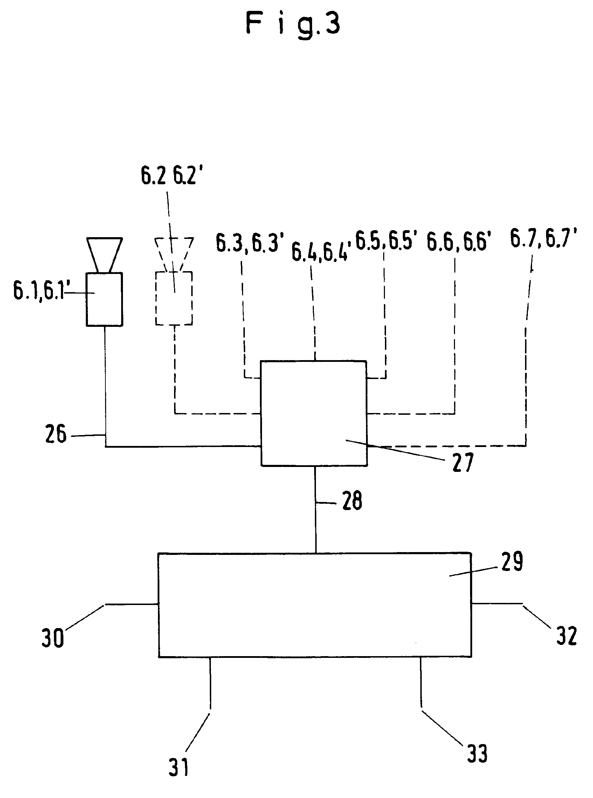

Die Verknüpfung der Kameras 6.1, 6.1' bis 6.7, 6.7' (Fig. 2) mit der Auswerteeinheit ist in einem Blockschaltbild in Figur 3 dargestellt. Jede Kamera 6.1, 6.1' bis 6.7, 6.7' ist über eine Leitung 26 mit einem Multiplexer 27 verbunden, so daß getaktet nacheinander die jeweiligen Kamerapaare, z. B. 6.1, 6.1' abgefragt werden können. Da die Taktzeit sehr kurz ist, kann man sagen, daß der Körper 1, 1' in allen sieben Meßebenen nahezu gleichzeitig abgetastet wird. Die Signale gehen vom Multiplexer 27 über eine Leitung 28 in die zentrale Recheneinheit 29, in der die ankommenden Signale verarbeitet und daraus die gewünschten geometrischen Kenndaten der äußeren Gestalt des zu messenden Körpers 1, 1' abgeleitet werden. Die zentrale Recheneinheit 29 ist mit verschiedenen peripheren Geräten wie einer Speichereinheit 30, einem Terminal 31 und einem Drucker 32 verbunden. Di Eingabe der Start- und Kommandobefehle erfolgt über eine Tastatur 33.

Figur 4 zeigt die Verhältnisse der Abtastung für einen kleineren Körper 1', der hier beispielhaft einen ideal kreisrunden Querschnitt aufweist. In einem solchen Fall genügt die Abtastung mit nur einer Kamera 6.4' und die Beobachtung nur einer äußeren sichtbaren Begrenzung 34. Die optische Achse 21' der Kamera 6.4' ist hier als strichpunktierte Linie dargestellt und die Scharfebene 35 liegt in der Ebene der größten Querschnittserstreckung 17, in diesem Fall der Durchmesser des Körpers 1'. Die äußere sichtbare Begrenzung 34 befindet sich aufgrund der gegebenen geometrischen Verhältnisse nicht in der Ebene der größten durch den Mittelpunkt M gehenden Querschnittserstreckung 17. Dieser an sich gewünschte Punkt 36 liegt aber im Schatten der beobachtenden Kamera 6.4'. Abgetastet wird also ein fiktiver Punkt 37, der einen Abstand 1 zum Punkt 36 hat. Dieser fiktive Punkt 37 ist der Schnitt des Abtaststrahles 38 mit der Scharfebene 35. Dieser Fehler Δ 1 kann aufgrund der Winkelverhältnisse mathematisch kompensiert und damit die gesuchte größte Querschnittserstreckung 17 ermittelt werden. Deutlich wird in dieser Darstellung der Zusammenhang zwischen der Größe des Beobachtungswinkels α 1 und dem Abstand Δ 1. Je kleiner dieser Winkel α ist, desto mehr nähert sich der Punkt 37 dem Durchmesserpunkt 36. Im speziellen Fall eines parallel zur optischen Achse 21' verlaufenden Abtaststrahles 38 wird Δ 1 gleich Null und der Punkt 37 fällt mit dem Punkt 36 zusammen.

Figur 5 zeigt die Verhältnisse der Abtastung für einen größeren Körper 1, der einen stark übertriebenen ovalen Querschnitt aufweist. In einem solchen Fall müssen zur Bestimmung der Achsabweichung zwei äußere sichtbare Begrenzungen 40, 41 bzw. 41' des Körpers 1 abgetastet werden. Dies kann einmal durch eine einzige Kamera 6.4′ erfolgen oder vorteilhafter mit Hilfe einer zweiten Kamera 6.4. Wie schon in Figur 4 ausgeführt, wird bei einer Abtastung mit zwei Kameras 6.4, 6.4′ der zu korrigierende Abstand Δ 2 kleiner im Vergleich zu Δ 2′ bei einer Abtastung mit nur einer einzigen Kamera 6.4′. Die beiden Kameras 6.4, 6.4′ sind in einem festen definierten Abstand 19 zueinander angeordnet und die optischen Achsen 21, 21′ verlaufen parallel. In dieser Darstellung wird deutlich, daß es bei einem Körper 1 mit einem ovalen Querschnitt zwei sich überlagernde Bewegungen der äußeren Begrenzung 40, 41 gibt. Einmal wandern die Begrenzungen 40, 41 symmetrisch zweimal pro Umdrehung um den Betrag der Ovalität und zum anderen durch die Bewegung des Körpers 1 infolge der Achsabweichung.

## Patentansprüche

1. Verfahren zur Erfassung des Achsverlaufes eines langgestreckten, zylindrischen Körpers (1), auf den ein im Abstand (22) angeordneter und relativ dazu sich bewegender Bildsensor (6) gerichtet ist, der das wandernde Bild einer vor dem Hintergrund sich abhebenden sichtbaren äußeren Begrenzung des Körpers (1) in elektrische Signale umwandelt, aus denen die äußere Gestalt des Körpers (1) beschreibende geometrische Kenndaten abgeleitet werden können, **dadurch gekennzeichnet**, daß der Körper (1) mit einer endlichen Länge statisch bestimmt gelagert (3,3′) und um seine Längsachse (8) gedreht wird (2) und die während der Drehung (2) des Körpers (1) auftretende Veränderung der absoluten Winkellage zweier nahezu gegenüberliegender sichtbarer äußerer Begrenzungen (34,40,41,41′) des Körpers (1) in bezug auf die ortsfeste optische Achse (21,21′) des Bildsensors (6) durch nahezu gleichzeitige Antastung in wenigstens einer nicht mit den Auflagestellen (3,3′) zusammenfallenden, ausgewählten Meßebene in elektrische Signale umgewandelt wird, aus denen mittels eines mathematischen Modells die Achsabweichung in der Meßebene berechnet und mit den zu Null gesetzten Achsabweichungen in den beiden Auflagestellen (3,3′) zu einer den Achsverlauf beschreibenden Funktion verknüpft werden.

2. Vertahren nach Anspruch 1, **dadurch gekennzeichnet**, daß die Veränderung der Winkellage der sichtbaren äußeren Begrenzung (34,40,41,41′) des Körpers (1) in mehreren über die Länge des Körpers (1) verteilt angeordneten Meßebenen erfaßt wird.

3. Vertahren nach Anspruch 2, **dadurch gekennzeichnet**, daß zur genauen Zuordnung der Meßebenen zur Längenposition des Körpers (1) der Körper (1) in Längsrichtung relativ zu den auf ihn gerichteten Bildsensoren (6) bewegt (9) wird.

4. Verfahren nach Anspruch 1, **dadurch gekennzeichnet**, daß die Art der Abtastung in einer Meßebene so erfolgt, daß der Abstand (Δ1) des Schnittpunktes (37) des die äußere Begrenzung (34) tangierenden Abtaststrahles (38) mit der Scharfebene (35) zum Schnittpunkt (36) der in der Scharfebene (35) liegenden und durch den Mittelpunkt (M) gehenden Querschnittserstreckung des Körpers (1) mit dieser möglichst klein ist.

5. Einrichtung zur Durchführung des Verfahrens nach den Ansprüchen 1 bis 4 mit einem im Abstand (22) zum Körper (1) und auf diesen gerichteten, relativ dazu sich bewegbaren Bildsensor (6), der mit einer Auswerteinheit verbunden und so auf den Körper (1) ausgerichtet ist, daß die in der Meßebene liegende optische Achse (21,21′) in Projektion auf die die Längsachse (8) des Körpers (1) enthaltende Ebene mit dieser einen rechten Winkel bildet, **dadurch gekennzeichnet**, daß der Körper (1) auf zwei in einem veränderbaren Abstand (4) voneinander angeordneten Rollenpaaren (3,3′) drehbar und axial verschiebbar (9) gelagert und mindestens ein auf ihn gerichteter Bildsensor (6) an einer Haltevorrichtung befestigt ist, wobei während der Drehung (2) des Körpers (1) die anvisierte sichtbare äußere Begrenzung (34,40,41,41′) des Körpers (1) in der einmal gewählten Meßebene verbleibt und die bei der Abtastung der äußeren Begrenzung (34,40,41,41′) anfallenden elektrischen Signale einer zentralen Recheneinheit (29) zugeführt werden, die mittels eines mathematischen Modells die Achsabweichungen in der Meßebene berechnet und mit den zu Null gesetzten Achsabweichungen in den beiden Auflagestellen (3,3′) zu einer den Achsverlauf beschreibenden Funktion verknüpft.

6. Einrichtung nach Anspruch 5, **dadurch gekennzeichnet**, daß mehrere mit der zentralen Recheneinheit (29) verbundene Bildsensoren (6.1 - 6.7) in einem bestimmten Abstand (13) voneinander auf einer Haltevorrichtung befestigt sind.

7. Einrichtung nach Anspruch 6, **dadurch gekennzeichnet**, daß der in Längsrichtung gesehene erste (6.1) bzw. letzte (6.7) Bildsensor mit seiner Meßebene in einem definierten Abstand (11) zum jeweiligen Ende (12) des Körpers (1) sich befindet und die übrigen Bildsensoren (6.2 - 6.6) sich in etwa gleichmäßig über die Länge des Körpers (1) verteilen.

8. Einrichtung nach den Ansprüchen 5 und 6, **dadurch gekennzeichnet**, daß der Abstand (22) der Kamera bzw. der Kameras (6.1-6.7) von der Längsachse (8) des Körpers (1) und die Brennweite der Optik der Kamera bzw. der Kameras (6.1-6.7) so auf die Abmessungen des Körpers (1) abgestimmt sind, daß die Scharfebene (35) in der Ebene der größten Querschnittserstreckung des Körpers (1) liegt und die von der Optik aufgespannte sektorale Meßebene einen kleinen Beobachtungswinkel (18,18') aufweist.

9. Einrichtung nach Anspruch 8, **dadurch gekennzeichnet**, daß der halbe Beobachtungswinkel (18,18') im Bereich zwischen 0 und 15 Grad liegt.

10. Einrichtung nach Anspruch 8, **dadurch gekennzeichnet**, daß zur Abdeckung großer Abmessungsbereiche für jeweils eine Meßebene zwei Kameras (6.4,6.4') an der Haltevorrichtung befestigt sind, die bei gleichem Abstand (22) zur Längsachse (8) des Körpers (1) einen vorbestimmten Abstand (19) zueinander aufweisen und deren optische Achsen (21,21') parallel verlaufen.

## Claims

1. Method for detecting the axial trend of an elongate, cylindrical body (1), at which an image sensor (6), which is arranged at a distance (22) and moves relative to the body, is directed, which sensor converts the moving image of a visible outer boundary, which stands out against the background, of the body (1) into electrical signals, from which geometric characteristic data, which describe the outer form of the body (1), can be derived, characterised in that the body (1) of a finite length is mounted in a statically determined manner (3, 3') and is rotated (2) about its longitudinal axis (8), and the change occurring during the rotation (2) of the body (1) in the absolute angular position of two almost opposite visible outer boundaries (34, 40, 41, 41') of the body (1) in relation to the fixed optical axis (21, 21') of the image sensor (6) is converted by almost simultaneous scanning into at least one selected measurement plane, which does not coincide with the mounting points (3, 3'), from which signals the axial deviation in the measurement plane is calculated by means of a mathematical model and combined with the axial deviations, which are set at zero, at the two mounting points (3, 3') to form a function which describes the axial trend.

2. Method according to claim 1, characterised in that the change in the angular position of the visible outer boundary (34, 40, 41, 41') of the body (1) is detected in a plurality of measurement planes which are distributed over the length of the body (1).

3. Method according to claim 2, characterised in that the body (1) is moved (9) in the longitudinal direction relative to the image sensors (6), which are directed at it, in order to accurately associate the measurement planes with the longitudinal position of the body (1).

4. Method according to claim 1, characterised in that the scanning takes place in a measurement plane such that the distance ($\Delta$1) of the point of intersection (37) of the scanning beam (38) tangent to the outer boundary (34) with the focal plane (35) from the point of intersection (36) of the cross-sectional extent, which lies in the focal plane and passes through the centre point (M), of the body (1) with this plane is as small as possible.

5. Device for carrying out the method according to claims 1 to 4, with an image sensor (6), which is arranged at a distance (22) from the body (1), directed at the latter and can move relative thereto, which sensor is connected to an evaluation unit and aimed at the body (1) such that, in a projection onto the plane containing the longitudinal axis (8) of the body (1), the optical axis (21, 21') lying in the measurement plane forms a right angle with the former plane, characterised in that the body (1) is mounted in a rotatable and axially displaceable manner (9) on two roller pairs (3, 3'), which are arranged at a variable distance from one another, and at least one image sensor (6), which is directed at the body, is secured to a holding device, the visible outer boundary of the body (1) which is sighted remaining in the selected measurement plane during the rotation (2) of the body (1), and the electrical signals produced upons scanning the outer boundary (34, 40, 41, 41') being fed to a central processing unit (29) which, by means of a mathematical model, calculates the axial deviations in the measurement plane and combines them with the axial deviations, which are set at zero, at the two mounting points (3, 3') to form a function which describes the axial trend.

6. Device according to claim 5, characterised in that a plurality of image sensors (6.1 - 6.7), which are connected to the central processing unit (29), are secured to a holding device at a certain distance (13) from one another.

7. Device according to claim 6, characterised in that the first (6.1) or last (6.7) image sensor, when viewed in the longitudinal direction, is disposed at a defined distance other image sensors (6.2 - 6.6) are distributed approximately uniformly over the length of the body (1).

8. Device according to claims 5 and 6, characterised in that the distance (22) of the camera or cameras (6.1 - 6.7) from the longitudinal axis (8) of the body (1) and the focal length of the lens of the camera or cameras (6.1 - 6.7) are adapted to the dimensions of the body (1) such that the focal plane (35) lies in the plane of the greatest cross-sectional extent of the body (1) and the sectorial measurement plane spanned by the lens has a small viewing angle (18, 18').

9. Device according to claim 8, characterised in that half the viewing angle (18, 18') is between 0 and 15 degrees.

10. Device according to claim 8, characterised in that, in order to cover large dimensional ranges, two cameras (6.4, 6.4') are secured to the holding device for each measurement plane, which cameras, while being disposed at the same distance (22) from the longitudinal axis (8) of the body (1), are disposed at a predetermined distance (19) from one another and the optical axes (21, 21') of which extend in parallel.

**Revendications**

1. Procédé pour effectuer le relevé de l'allure de l'axe d'un corps cylindrigue allongé (1) sur lequel est dirigé un détecteur d'image (6) disposé à une distance (22) du corps cylindrique et se déplaçant relativement par rapport à celui-ci, le détecteur d'image convertissant l'image qui se déplace d'une délimitation extérieure du corps (1) se détachant sur le fond, en signaux électriques à partir desquels il est possible de déduire des données géométriques qui définissent la configuration extérieure du corps (1), caractérisé en ce que le corps (1) présentant une longueur finie est mis en rotation (2) autour de son axe longitudinal (8) en étant supporté statiquement de manière définie (3, 3'), et en ce que la variation de la position angulaire absolue, apparaissant au cours de la rotation (2) du corps (1), de deux délimitations extérieures visibles (34, 40, 41, 41') pratiquement opposées du corps (1), par rapport à l'axe optique (21, 21') de position fixe du détecteur d'image (6), est convertie, par une détection pratiquement simultanée dans au moins un plan de mesure sélectionné ne se confondant pas avec les points d'appui (3, 3'), en signaux électriques à partir desquels est calculé à l'aide d'un modèle mathématique, l'écart de l'axe dans le plan de mesure, qui est combiné aux écarts de l'axe fixés à zéro au niveau des deux points d'appui (3, 3') pour établir une fonction définissant l'allure de l'axe.

2. Procédé selon la revendication 1, caractérisé en ce que la variation de la position angulaire de la délimitation extérieure visible (34, 40, 41, 41') du corps (1) est relevée dans plusieurs plans de mesure répartis sur la longueur du corps (1).

3. Procédé selon la revendication 2, caractérisé en ce que pour l'affectation précise des plans de mesure à la position longitudinale du corps (1), le corps (1) subit un déplacement (9) en direction longitudinale par rapport aux détecteurs d'image (6) dirigés sur lui.

4. Procédé selon la revendication 1, caractérisé en ce que le mode de détection dans un plan de mesure est effectué de manière à ce que la distance (Δ1) entre le point d'intersection (37) du rayon de détection (38) tangent à la délimitation extérieure (34) avec le plan de mise au point (35), et le point d'intersection (36) de l'étendue en section droite du corps (1) passant par le centre (M) et située dans le plan de mise au point (35) avec celui-ci, est la plus faible possible.

5. Installation pour la mise en oeuvre du procédé selon les revendications 1 à 4, comportant un détecteur d'image (6) disposé à une distance (22) du corps cylindrique en étant dirigé sur lui et se déplaçant relativement par rapport à celui-ci, le détecteur d'image étant relié à une unité de traitement de données et dirigé sur le corps (1) de manière à ce que l'axe optique (21, 21') situé dans le plan de mesure, en projection sur le plan contenant l'axe longitudinal (8) du corps (1), forme avec ce plan un angle droit, caractérisée en ce que le corps (1) est monté sur deux paires de galets (3, 3') disposées à une distance (4) l'une de l'autre susceptible d'être modifiée, de manière à pouvoir tourner et subir un déplacement axial (9), et en ce qu'au moins un détecteur d'image (6) dirigé sur le corps est fixé sur un dispositif de support, la délimitation extérieure (34, 40, 41, 41') visible et qui a été visée du corps (1), restant, au cours de la rotation (2) du corps (1), dans le plan de mesure sélectionné une fois, et les signaux électriques produits au cours de la détection de la délimitation extérieure (34, 40, 41, 41') étant transmis à une unité centrale de calcul (29), qui à l'aide d'un modèle mathématique, calcule les écarts de l'axe dans le plan de mesure et les combine aux écarts de l'axe fixés à zéro au niveau des deux points d'appui (3, 3'), pour établir une fonction définissant l'allure de l'axe.

6. Installation selon la revendication 5, caractérisée en ce que plusieurs détecteurs d'image (6.1 - 6.7) reliés à l'unité centrale de calcul (29), sont fixés sur un dispositif de support en étant espacés réciproqement d'une distance (13).

7. Installation selon la revendication 6, caractérisée en ce que, vu dans la direction longitudinale, le premier détecteur d'image (6.1) et le dernier détecteur d'image (6.7) se situent chacun avec son plan de mesure à une distance définie (11) de l'extrémité respective (12) du corps (1), et en ce que les autres détecteurs d'image (6.2 - 6.6) se répartissent sensiblement de manière régulière sur la longueur du corps (1).

8. Installation selon les revendications 5 et 6, caractérisée en ce que la distance (22) de la caméra ou des caméras (6.1 - 6.7) à l'axe longitudinal (8) du corps (1) et la focale de l'objectif de la caméra ou des caméras (6.1 - 6.7) sont choisies de manière adaptée aux dimensions du corps (1) de telle sorte que le plan de mise au point (35) se situe dans le plan de la plus grande étendue en section droite du corps (1), et que le secteur du plan de mesure balayé par l'objectif présente un angle d'observation (18, 18') de faible grandeur.

9. Installation selon la revendication 8, caractérisée en ce que le demi-angle d'observation (18, 18') se situe entre 0 et 15 degrés.

10. Installation selon la revendication 8, caractérisée en ce que pour couvrir des zones de mesure de dimensions plus importantes, deux caméras (6.4, 6.4′) sont fixées sur un dispositif de support pour chaque plan de mesure, et en ce que ces deux caméras sont disposées à une même distance (22) de l'axe longitudinal (8) du corps (1) et présentent entre-elles une distance prédéterminée (19), leurs axes optiques (21, 21′) étant parallèles entre-eux.

EP 0 348 340 B1

A

Fig.1

14.1  14.2  14.3  14.4  14.5  14.6  14.7

12  10  9  5  10'  1  42  8

2  3  3'

11  10  3  10'  3'  7

7  4  10'

6.1  6.3  6.4  6.5  6.6  6.7

10  13  A

Fig.2

EP 0 348 340 B1

# F i g.3

# F i g.4

# Fig.5